# FASCICULE DE BREVET EUROPEEN

(11) **EP 1 317 355 B1**
(45) Date de publication et mention de la délivrance du brevet: **04.05.2005**
(21) Numéro de dépôt: 01965381.5
(22) Date de dépôt: 05.09.2001
(51) Int. Cl.: B60G 11/24

(54) **PROCEDE DE FIXATION D'AU MOINS UN INSERT DE GUIDAGE ENTRE DEUX TUBES COAXIAUX, NOTAMMENT DANS UN DISPOSITIF ANTI-ROULIS DE VEHICULE AUTOMOBILE**
BEFESTIGUNGSVERFAHREN FÜR MINDESTENS EINEN FÜHRUNGSEINSATZ ZWISCHEN ZWEI KOAXIALEN ROHREN, BEVORZUGT IN EINEM KRAFTFAHRZEUG-STABILISATOR
METHOD FOR FIXING AT LEAST A GUIDING INSERT BETWEEN TWO COAXIAL TUBES, IN PARTICULAR IN A MOTOR VEHICLE ANTI-ROLL DEVICE

(30) Priorité: 12.09.2000 FR 0011608
(43) Date de publication de la demande: 11.06.2003
(73) Titulaire: COMPAGNIE GENERALE DES ETABLISSEMENTS MICHELIN-MICHELIN & CIE, 63040 Clermont-Ferrand Cédex (FR); VALLOUREC COMPOSANTS AUTOMOBILES VITRY, 51300 Vitry le Francois (FR)
(72) Inventeur: BERTHELLEMY, Alain, F-52190 Giffaumont Champaubert (FR); MINGUET, Denis, F-51300 Vitry-le-François (FR); VALIN, Daniel, F-51300 Saint Amand sur Fion (FR)
(74) Mandataire: Plaçais, Jean-Yves
(86) Numéro de dépôt international: PCT/FR2001/002753
(87) Numéro de publication internationale: WO 2002/022384

(56) Documents cités:
- EP-A- 0 943 533
- WO-A-97/47486
- DE-A- 1 630 901
- DE-A- 2 804 256
- FR-A- 2 778 605

## Description

L'invention concerne l'assemblage de dispositifs pour suspensions automobiles, tels que des dispositifs anti-roulis.

Dans l'invention que décrit la récente demande internationale PCT WO97/47486, le dispositif anti-roulis est formé de deux tubes coaxiaux emboîtés partiellement l'un dans l'autre. Les tubes interne et externe sont reliés l'un à l'autre par deux inserts de guidage. Chaque insert comprend une partie active, telle qu'une bague en élastomère ou un roulement, ou encore un palier. Cette partie active présente une forme générale cylindrique creuse et elle est comprise entre deux viroles métalliques, l'une interne et l'autre externe. Chaque virole est destinée à être fixée à un tube.

Compte tenu du contexte pratique de l'assemblage des deux tubes avec les deux inserts, la possibilité qui s'offre actuellement consiste à :
- emmancher d'abord, à force, les deux inserts autour du tube interne, de petit diamètre, de sorte qu'ils soient fixés à ce tube par leur virole interne, et
- introduire en force une partie du tube interne, portant les inserts, dans le tube externe, de grand diamètre, jusqu'à ce que les inserts atteignent une position choisie dans ce tube externe.

Ceci nécessite une précision élevée de fabrication des tubes.

En effet, une difficulté survient lorsqu'il est souhaité de relier les tubes par deux inserts. En pratique, l'une des extrémités du tube externe est rétrécie et les inserts ne peuvent êtres introduits que par un même côté du tube externe. Ainsi, une fois que le second insert est engagé dans le tube externe, le premier insert préalablement introduit ne peut être soutenu et maintenu en position, car il devient inaccessible. Cette difficulté se présente même avec un seul insert, lorsque celui-ci doit être fixé dans une position distante de l'extrémité accessible du tube externe.

De plus, plusieurs impératifs doivent être respectés :
- la partie active de l'insert ne doit être ni comprimée ni cisaillée lors de la fixation dans le tube externe ;
- la partie active de l'insert peut comporter un matériau dont les propriétés ou les dimensions peuvent se dégrader, s'il est soumis à des températures trop élevées ;
- la fixation des inserts dans le tube externe doit permettre la transmission d'efforts cycliques élevés.

L'état de la technique est présenté dans les documents DE 1 630 901, DE 2 804 256, EP 0 943 553, FR 2 778 605 et WO 97/47486.

DE 1 630 901 décrit un procédé de fixation d'au moins un insert de guidage entre deux tubes coaxiaux, notamment d'un dispositif anti-roulis pour véhicule automobile, du type comprenant les étapes suivantes :
a) fixer d'abord chaque insert autour d'un tube interne, et
b) introduire une partie du tube interne, portant l'insert, dans une extrémité accessible d'un tube externe, jusqu'à ce qu'il atteigne une position choisie dans ce tube,
   ledit procédé comportant une étape préalable consistant à :
   a1) conformer chaque insert (G1) pour qu'il présente un diamètre extérieur légèrement inférieur au diamètre interne du tube externe (T1), en vue de permettre la translation avec jeu de l'insert dans ce tube, de son extrémité jusqu'à au moins ladite position choisie (P1),
   et le procédé se poursuivant par les étapes suivantes :
c) faire glisser ainsi chaque insert dans le tube externe jusqu'à sa position choisie, et
d) fixer, en ladite position, chaque insert dans le tube externe.

La présente invention vient améliorer la situation.
Elle propose à cet effet un procédé de fixation d'au moins un insert de guidage entre deux tubes coaxiaux, en particulier dans des conditions où l'insert devient inaccessible. L'insert de guidage comprend préférentiellement une partie active annulaire, entourée extérieurement d'une enveloppe métallique (une virole en pratique) qui lui est adhérente, pour empêcher tout glissement entre la partie active et son enveloppe.

L'invention part alors d'un procédé comportant les étapes suivantes :
a) fixer d'abord chaque insert autour d'un tube interne, et
b) introduire une partie du tube interne, portant l'insert, dans une extrémité accessible d'un tube externe, jusqu'à ce qu'il atteigne une position choisie dans ce tube.

Selon une caractéristique importante de l'invention, le procédé comprend une étape préalable consistant à :
a1) conformer chaque insert pour qu'il présente un diamètre extérieur légèrement inférieur au diamètre interne du tube externe, en vue de permettre la translation avec jeu de l'insert dans ce tube, de son extrémité accessible jusqu'à au moins la position choisie précitée,
   tandis que le procédé se poursuit par les étapes suivantes :
   c) faire glisser ainsi chaque insert dans le tube jusqu'à sa position choisie,
   d) effectuer une étape de "rattrapage de jeu" consistant à réduire localement, en ladite position choisie, le diamètre du tube externe (T1), et
   e) fixer, en ladite position, chaque insert dans le tube.

La fixation de chaque insert sur le tube de petit diamètre peut s'effectuer par tout moyen connu, notamment par emmanchement à force.

En revanche, la fixation de chaque insert dans le tube de grand diamètre peut s'effectuer par tout moyen apte à supporter les efforts subis et qui ne dégrade pas les propriétés de l'insert, par exemple par soudage, rivetage, sertissage, collage, ou encore par magnétoformage, comme on le verra plus loin.

Par jeu, on entend un espace typiquement compris entre 0,01 et 0,3 mm. Pour certaines applications spécifiques, on peut prévoir un jeu pouvant aller jusqu'à 5 mm. Il en résulte une tolérance relativement peu sévère sur le diamètre intérieur du tube externe.

L'étape dite de rattrapage de jeu consiste, à réduire localement, en la position choisie, le diamètre du tube externe, par exemple par emboutissage, pour, d'une part, maintenir sensiblement chaque insert en position avant sa fixation définitive dans le tube de grand diamètre et, d'autre part, améliorer la tenue en fatigue de l'assemblage tubes/inserts même pour des jeux initiaux de plusieurs millimètres.

Selon une caractéristique optionnelle avantageuse de l'invention, la longueur axiale de la partie active de chaque insert est inférieure à celle de son enveloppe. Ainsi, l'enveloppe externe de l'insert se prolonge axialement au delà de la partie active de l'insert, et ce prolongement de l'enveloppe est disposé, au cours de l'étape c), dans la position choisie. L'insert est donc fixé au tube externe par ce prolongement de l'enveloppe.

Le prolongement peut être réalisé d'un côté de la partie active de l'insert, ou encore des deux côtés.

D'autres caractéristiques et avantages de l'invention apparaîtront à l'examen de la description détaillée ci-après, et des dessins annexés sur lesquels :
- la figure 1 représente schématiquement une vue en coupe longitudinale d'un dispositif anti-roulis pour train arrière de suspension pour véhicule automobile, à deux tubes T1 et T2 emboîtés l'un dans l'autre et reliés par des inserts de guidage G1 et G2;
- les figures 2A et 2B représentent schématiquement un dispositif anti-roulis du type représenté sur la figure 1, à deux étapes successives d'un procédé de montage de la technique antérieure;
- la figure 2C représente schématiquement un dispositif anti-roulis du type représenté sur la figure 1, monté selon un procédé au sens de la présente invention;
- les figures 3A, 3C et 3E représentent schématiquement des vues en coupe transversale d'un assemblage selon l'invention, à différentes étapes de fixation d'un insert par rivetage, selon un mode de réalisation préféré, et les figures 3B, 3D et 3F représentent schématiquement des vues en coupe longitudinale de ce dispositif anti-roulis au cours des mêmes étapes;
- les figures 4A, 4B et 4C représentent de façon plus détaillée des vues en coupe longitudinale de l'assemblage, à différentes étapes de fixation par rivetage d'un insert;
- les figures 5A, 5B et 5C représentent partiellement un assemblage à différentes étapes de fixation par soudure d'un insert;
- la figure 5D représente partiellement un dispositif anti-roulis muni d'un insert fixé par soudure laser;
- la figure 6A représente partiellement, selon une coupe transversale (ligne de coupe A-A de la figure 6C), un dispositif anti-roulis muni d'un insert comprenant une enveloppe conformée pour être fixée par sertissage au tube T1 qui l'entoure;
- la figure 6B représente partiellement le dispositif de la figure 6A, avec l'insert dans sa position choisie, serti au tube externe;
- les figures 6C et 6E représentent respectivement une vue de face et une vue en coupe longitudinale (ligne E-E de la figure 6C) de l'insert des figures 6A et 6B, selon une réalisation particulière;
- les figures 6D et 6F représentent respectivement une vue de face et une vue en coupe longitudinale (ligne F-F de la figure 6D) de l'insert des figures 6A et 6B, selon une variante; et
- la figure 7 représente partiellement un dispositif anti-roulis muni d'un insert fixé par collage au tube T1.

Les dessins contiennent, pour l'essentiel, des éléments de caractère certain. Ils pourront donc non seulement servir à mieux faire comprendre la description, mais aussi contribuer à la définition de l'invention, le cas échéant.

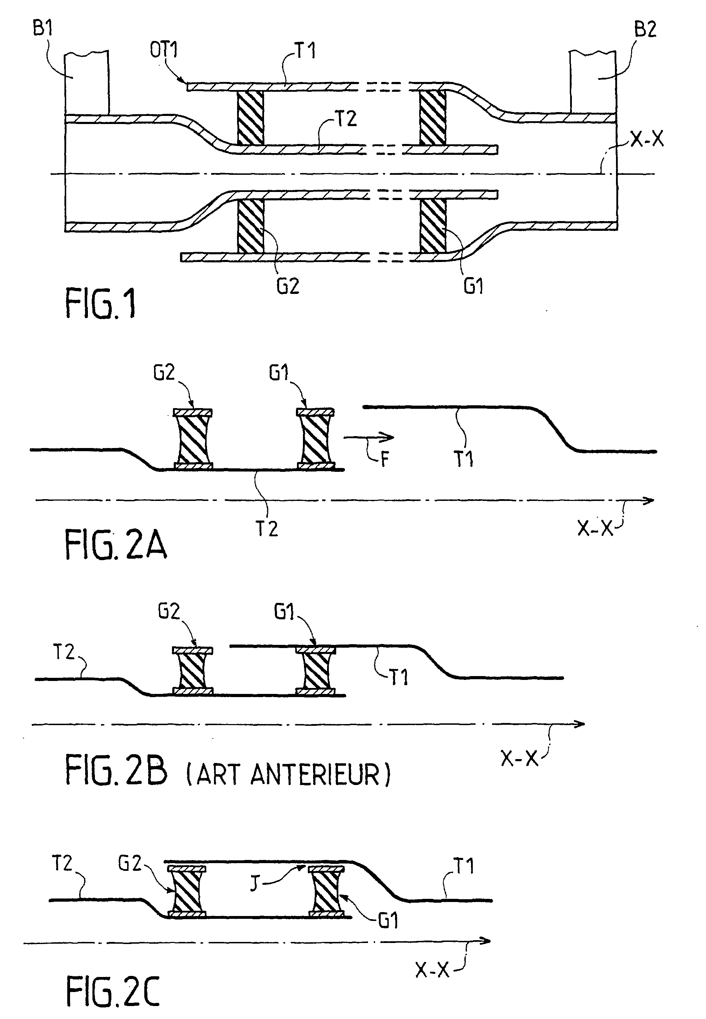

On se réfère tout d'abord à la figure 1 pour décrire un dispositif anti-roulis pour une suspension de véhicule automobile. Ce dispositif comprend un premier tube T1 externe, de grand diamètre, dans lequel est emboîté un second tube T2 interne, de petit diamètre. Ces deux tubes sont sensiblement coaxiaux et reliés l'un à l'autre par des inserts de guidage G1 et G2. Dans l'exemple représenté sur la figure 1, le dispositif anti-roulis comporte deux inserts de guidage.

Cependant, dans d'autres variantes, il peut n'être prévu qu'un seul insert.

Les inserts de guidage G1 et G2 sont préférentiellement réalisés sous la forme de bagues sensiblement circulaires, dont les surfaces interne et externe sont fixées respectivement au tube interne T2 et au tube externe T1.

Dans la réalisation décrite dans la demande PCT WO97/47486, les inserts de guidage G1 et G2 comprennent des parties actives réalisées sous la forme de bagues en matériau élastomère (par exemple en caoutchouc) solidaires de deux viroles métalliques interne et externe. Dans une variante décrite dans la demande FR 00 02706, la partie active d'au moins un insert est réalisée sous la forme d'un palier (par exemple un roulement à aiguilles ou à billes), tandis que la partie active d'un autre insert est réalisée sous la forme d'une bague en matériau élastomère.

Les extrémités libres des deux tubes sont solidaires de bras oscillants B1 et B2 sur lesquels sont montées des fusées porte-roues (non représentées).

Une telle structure est décrite de façon détaillée dans la demande publiée PCT WO97/47486 et dans la demande non publiée FR 00 02706.

On remarque sur la figure 1 que l'extrémité du tube T1, reliée au bras B2, est de diamètre sensiblement rétréci. Cette forme particulière du tube T1 ne permet l'introduction des inserts de guidage G1 et G2 que par son extrémité ouverte OT1 (côté du bras B1 dans la réalisation représentée sur la figure 1).

On se réfère maintenant à la figure 2A qui représente la moitié supérieure du dispositif anti-roulis représenté sur la figure 1, dans une première étape d'un procédé de fixation des inserts G1 et G2 de la technique antérieure.

Au préalable, les inserts de guidage G1 et G2 ont été emmanchés en force autour du tube T2 de petit diamètre. A l'étape représentée sur la figure 2B, le tube interne T2, portant les inserts G1 et G2, est introduit en force (flèche F) dans le tube externe T1, le long de son axe X-X.

L'introduction en force des inserts G1 et G2 dans le tube T1 risque de détériorer les parties actives des inserts de guidage. Il faudrait alors accompagner l'introduction du tube interne T2 en poussant sur les viroles externes des inserts. Or, on comprend bien que, une fois que l'insert G2 a été introduit, le premier insert G1 préalablement introduit n'est plus accessible.

En se référant à la figure 2C, on prévoit, selon une caractéristique importante de la présente invention, un léger jeu J entre les inserts de guidage et le tube externe T1.

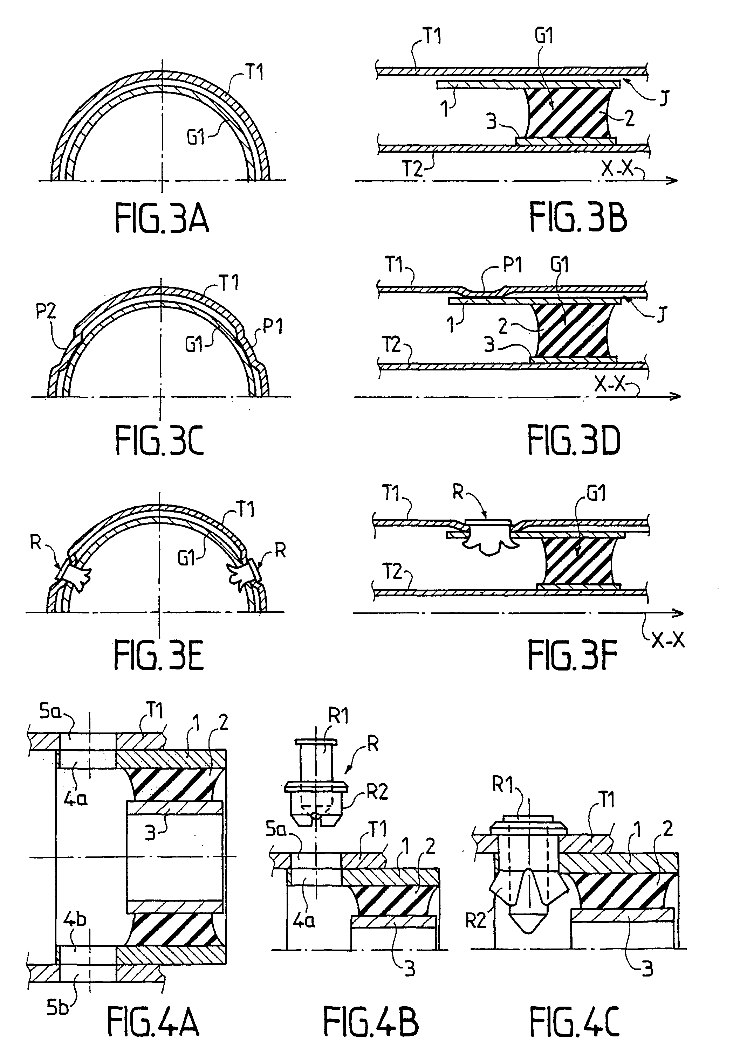

On se réfère maintenant aux figures 3A à 3F pour décrire une fixation d'un insert G1 selon un mode de réalisation préféré de la présente invention.

En particulier, sur la vue de détail de la figure 3B, un insert de guidage G1 comprend une partie active 2, par exemple une bague en caoutchouc, dont la surface interne est solidaire d'une virole interne 3, métallique dans l'exemple décrit. Cette virole 3 est emmanchée en force autour du tube de petit diamètre T2.

La surface externe de cette partie active 2 est solidaire d'une virole externe 1, métallique dans l'exemple décrit. Cette virole 1 est en regard de la surface interne du tube de grand diamètre T1, un jeu J les séparant.

On remarque sur la figure 3B que, contrairement à la virole interne 3, la virole externe 1 se prolonge axialement au-delà de la partie active 2, de sorte que cette partie active 2 est sensiblement déportée par rapport au centre de l'insert G1.

Les figures 3A et 3B représentent en particulier l'étape c) précitée qui correspond à l'introduction de l'insert G1 dans le tube T1 et son glissement jusqu'à une position choisie P1 (figure 3D). Ce glissement est assuré par le jeu J en translation. Ainsi, le jeu J entre le tube T1 et la virole externe 1 est prévu le long du tube T1, de son ouverture OT1 jusqu'à au moins cette position choisie P1.

Tel que représenté sur les figures 3C et 3D, le tube externe T1 présente un rattrapage de jeu, en la position choisie P1. Ce rattrapage de jeu consiste en un rétrécissement local du diamètre du tube externe T1, sur une partie seulement de sa longueur et en plusieurs points de sa circonférence.

Ce rattrapage de jeu peut être effectué par emboutissage à la presse après l'étape de mise en place de l'insert dans le tube dans sa position choisie.

On remarque sur la figure 3D que c'est le prolongement de la virole externe 1, au-delà de la partie active 2 de l'insert, qui est en regard de la position P1 (en laquelle le jeu J a été rattrapé). En cette position P1, un rivet R (figure 3F) est introduit dans le tube T1 et dans le prolongement de la virole 1, pour riveter l'insert de guidage G1 au tube T1.

En se référant à la figure 3E, il est prévu au moins deux fixations, dans l'exemple représenté, de l'insert G1 au tube T1.

Le nombre de fixations est fonction des efforts (de couple notamment) destinés à transiter entre le tube T1 et l'insert.

En se référant aux figures 4A à 4C, il est prévu de former en une même opération les ouvertures 4a dans la virole externe 1 et les ouvertures 5a dans le tube T1, au niveau de la position P1 où le jeu J est sensiblement rattrapé. Les ouvertures 4a et 4b de la virole 1 venant, de ce fait, coïncider avec les ouvertures 5a et 5b du tube T1, le rivet R est prêt à être introduit dans les ouvertures 4a et 5a de la virole et du tube.

Dans une réalisation préférée, le rivet R comprend une bague fendue en croix R2, dans laquelle vient s'introduire en force une pointe R1. En se référant à la figure 4C, les pans inclinés de la bague fendue R2 s'écartent pour laisser passer l'extrémité de la pointe R1 vers l'intérieur du tube T1. L'insert de guidage est ainsi riveté au tube T1.

Avantageusement, le rattrapage du jeu J dans la position P1 permet de diminuer substantiellement le cisaillement du rivet lorsque le dispositif anti-roulis est en service. Par ailleurs, il est avantageux de laisser la pointe R1 dans la bague fendue R2 pour limiter encore ce cisaillement. La pointe R1 reste ainsi prisonnière de la bague R2.

On se réfère maintenant aux figures 5A à 5C pour décrire une variante du mode de réalisation décrit ci-avant, selon laquelle la fixation de l'insert est assurée par soudure.

Une ouverture 5a est formée en la position choisie P1 dans le tube T1. Comme dans le mode de réalisation précédemment décrit, la partie active 2 de l'insert est déportée pour laisser un prolongement de la virole externe 1 en regard de l'ouverture 5a. Un pion de soudure P est introduit dans l'ouverture 5a du tube T1, jusqu'à venir en contact avec le prolongement de la virole externe 1.

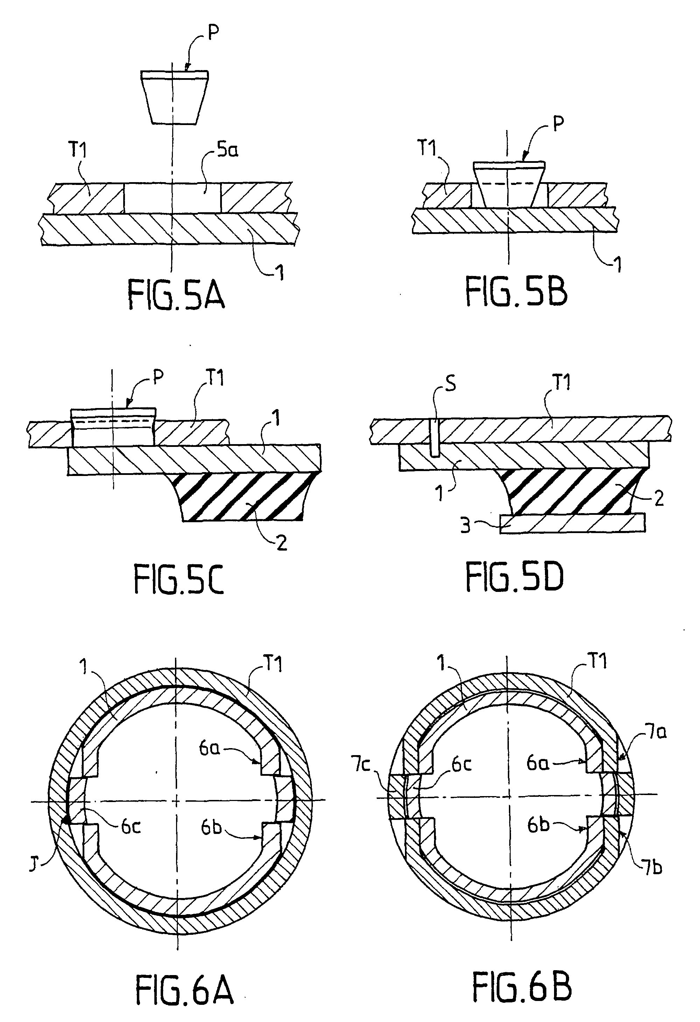

En se référant à la figure 5B, le pion P est préférentiellement de forme sensiblement conique, évasée vers l'extérieur du tube T1. Le pion P est positionné dans l'ouverture 5a du tube T1, préférentiellement sans toucher les rebords de cette ouverture. Ainsi, la soudure se réalise bien entre le pion et la virole 1, et non pas avec un rebord de l'ouverture 5a.

En se référant à la figure 5C, la température du pion P est élevée pour souder la virole 1 au tube T1. On remarque que le pion P comble de façon satisfaisante l'ouverture 5a du tube.

On limite ainsi les risques de matage, pour assurer une bonne tenue en service de l'insert de guidage dans le dispositif anti-roulis.

La partie active de l'insert (par exemple réalisée en matériau élastomère ou encore sous la forme d'un palier) peut s'avérer sensible à des élévations de température. Avantageusement, cette partie active est déportée par rapport à la position choisie P1, ce qui permet de limiter les risques de dégradation dus à l'élévation de température nécessaire pour réaliser la soudure.

Dans la variante de ce mode de réalisation qui est représentée sur la figure 5D, le tube T1 ne présente pas d'ouverture. En revanche, il est prévu plusieurs points de soudure S ou encore une ligne circonférentielle continue de soudure, cette soudure s'effectuant par échauffement du à l'incidence d'un rayon laser sur l'extérieur du tube T1. La zone thermiquement affectée par la soudure laser est profonde mais avantageusement étroite suivant l'axe X-X, ce qui permet de ne pas dégrader les propriétés de l'insert.

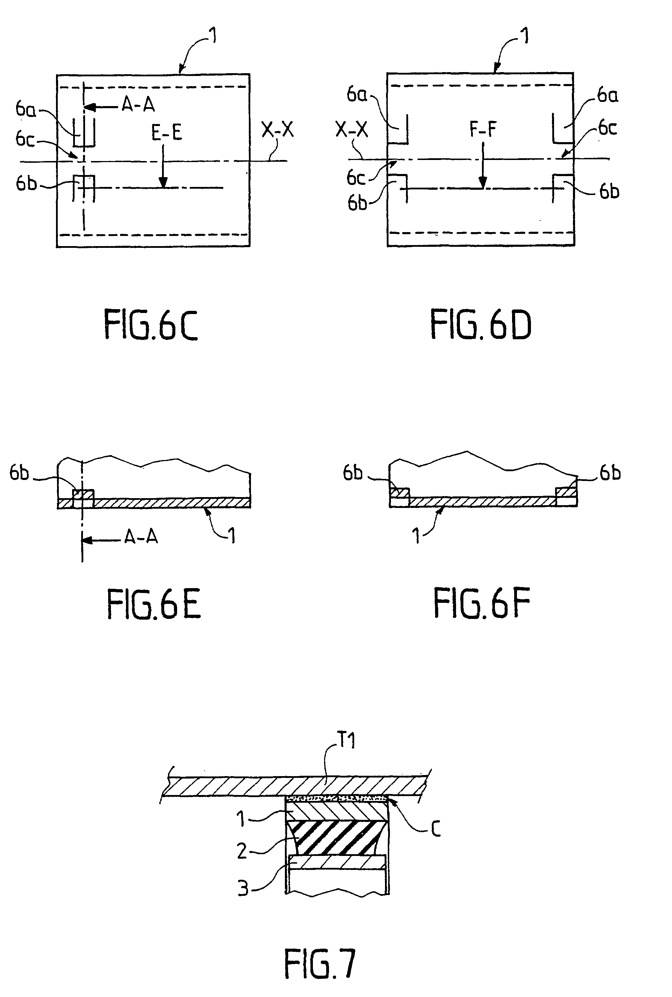

On se réfère maintenant aux figures 6A à 6D pour décrire un procédé de fixation d'un insert par sertissage, respectivement à deux étapes successives de ce procédé.

La figure 6A représente une coupe transversale du prolongement de la virole externe 1 de l'insert positionné dans le tube T1, avant sertissage.

Préférentiellement, le prolongement de la virole 1 présente au moins une paire d'encoches 6a, 6b embouties vers l'intérieur de la virole 1 (vers l'axe X-X). Dans la réalisation représentée sur les figures 6B et 6C, il est prévu deux paires respectivement disposées de part et d'autre de l'axe X-X.

Les encoches 6a,6b d'une même paire ont été préalablement formées de part et d'autre d'un plan médian de la virole 1 par découpage et emboutissage simultanés à l'aide d'outils tranchants. Ainsi, l'insert peut glisser dans le tube T1 puisqu'un jeu J en translation est toujours prévu entre l'intérieur du tube T1 et la partie non déformée 6c de la virole 1 jusqu'à la position P1 choisie.

Dans la forme de réalisation illustrée par les figures 6A et 6B, les encoches 6a et 6b sont orientées de telle sorte qu'elles viennent se positionner au droit de poinçons situés à l'extérieur du tube externe T1. Ces poinçons viennent ensuite découper et emboutir le tube externe pour former deux languettes 7a et 7b de manière illustrée par la figure 6B. Les languettes 7a et 7b viennent s'appuyer sur les encoches 6a et 6b préalablement formées dans la virole 1 de l'insert. Le système languettes et encoches bloque donc à la fois axialement, radialement et circonférentiellement dans les deux sens l'insert par rapport au tube externe.

En variante, les encoches 6a, 6b ne sont pas préalablement formées sur l'insert avant sertissage.

Selon cette variante, après avoir glissé l'insert dans le tube jusqu'à sa position choisie, on effectue des découpes et les emboutissages à la fois dans le tube T1 et dans la virole 1 pour former en même temps les encoches 6a,6b et les languettes 7a,7b qui viennent en même temps s'appuyer sur les encoches.

Cette forme de réalisation nécessite des outils particulièrement tranchants, aptes à cisailler une double épaisseur de métal.

Bien entendu, la présente invention ne se limite pas à la forme de réalisation décrite ci-avant à titre d'exemple ; elle s'étend à d'autres variantes.

Ainsi, on comprendra que l'insert de guidage peut être fixé par tout autre moyen permettant d'éviter d'altérer les propriétés de sa partie active. Par exemple, en se référant à la figure 7, la virole externe 1 de l'insert peut être solidarisée à la surface interne du tube T1 par collage. Une réalisation intéressante consisterait à prévoir une ouverture dans le tube T1, en la position choisie précitée, par laquelle est introduite de la colle C.

De façon générale, il est préférable de rattraper le jeu J en la position choisie, quel que soit le mode de fixation prévu. Ceci permet à la fois de choisir des tubes T1 dont la tolérance sur le diamètre intérieur est relativement large et d'améliorer la tenue à la fatigue des fixations entre tubes et inserts.

Comme décrit ci-avant, la partie active de l'insert peut comporter une bague en matériau élastomère, ou un palier tel qu'un roulement à aiguilles ou à billes, ou encore tout autre type de roulement. Néanmoins, si la partie active de l'insert est capable de supporter des températures élevées, il peut être prévu, dans le mode de réalisation selon lequel l'insert est fixé par soudure, d'introduire un pion de soudure au droit de la partie active. Dans une telle réalisation, le prolongement de la virole externe 1 (figure 5C) n'est plus nécessaire.

Quel que soit le mode de soudage, on limitera l'énergie de soudage ou on utilisera encore des procédés à basse énergie de soudage pour éviter de détériorer la partie active de l'insert.

Dans le mode de réalisation selon lequel l'insert est fixé par sertissage, il peut être prévu des encoches sur un seul côté (figure 6C) ou encore des deux côtés de la partie active (figure 6D), de part et d'autre de celle-ci. Dans ce dernier cas, le nombre d'encoches peut avantageusement être doublé.

Les encoches formées sur la virole externe de l'insert peuvent être réalisées en matière pleine, ou encore par découpe comme décrit ci-avant. Il est à noter que, dans la réalisation des encoches par découpe, un prolongement de la virole externe au-delà de la partie active est préférentiellement prévu.

Bien entendu, le nombre de points de fixation à prévoir (par rivetage, par sertissage ou par soudure) dépend des efforts, notamment cycliques, transitant par l'insert de guidage, axialement, radialement et en torsion.

## Revendications

1. Procédé de fixation d'au moins un insert de guidage (G1,G2) entre deux tubes coaxiaux (T1,T2), notamment d'un dispositif anti-roulis pour véhicule automobile, du type comprenant les étapes suivantes :
a) fixer d'abord chaque insert autour d'un tube interne, et
b) introduire une partie du tube interne, portant l'insert, dans une extrémité accessible d'un tube externe, jusqu'à ce qu'il atteigne une position choisie dans ce tube,
ledit procédé comportant une étape préalable consistant à :
a1) conformer chaque insert (G1) pour qu'il présente un diamètre extérieur légèrement inférieur au diamètre interne du tube externe (T1), en vue de permettre la translation avec jeu de l'insert dans ce tube, de son extrémité jusqu'à au moins ladite position choisie (P1),
et le procédé se poursuivant par les étapes suivantes :
c) faire glisser ainsi chaque insert dans le tube externe jusqu'à sa position choisie,
d) effectuer un "rattrapage de jeu" consistant à réduire localement, en ladite position choisie, le diamètre du tube externe (T1), et
e) fixer, en ladite position, chaque insert dans le tube externe.

2. Procédé selon la revendication 1, **caractérisé en ce que** l'enveloppe extérieure de chaque insert se prolonge axialement au delà d'une partie active (2) que comporte l'insert, et **en ce que** ce prolongement de l'enveloppe est disposé, au cours de l'étape c), en ladite position choisie.

3. Procédé selon l'une des revendications 1 et 2, **caractérisé en ce que** l'insert est soudé au tube externe (T1) au cours de l'étape d).

4. Procédé selon la revendication 3, **caractérisé en ce que** l'étape d) comprend les opérations suivantes :
d1) prévoir, en ladite position choisie, au moins une ouverture (5a) dans le tube externe (T1),
d2) introduire un pion de soudure (P) dans ladite ouverture, en contact avec la surface externe (1) de l'enveloppe d'un insert, et
d3) élever la température du pion pour souder cet insert au tube.

5. Procédé selon la revendication 4, **caractérisé en ce que**, pendant l'opération d2), le pion (P) est positionné sans qu'il ne touche les parois de l'ouverture.

6. Procédé selon la revendication 5, **caractérisé en ce que** le pion (P) est initialement de forme sensiblement conique, évasée vers l'extérieur du tube externe (T1).

7. Procédé selon la revendication 3, **caractérisé en ce que** l'insert est fixé au tube externe par soudure laser.

8. Procédé selon la revendication 7, **caractérisé en ce que** l'insert est soudé en une pluralité de points (S).

9. Procédé selon la revendication 7, **caractérisé en ce que** l'insert est soudé suivant une ligne circonférentielle continue.

10. Procédé selon l'une des revendications 3 à 9, prises en combinaison avec la revendication 2, **caractérisé en ce que** l'insert est soudé au tube externe (T1) par le prolongement de son enveloppe externe (1), en sorte de préserver thermiquement ladite partie active.

11. Procédé selon l'une des revendications 1 et 2, **caractérisé en ce que** l'insert est fixé par rivetage au tube externe au cours de l'étape d).

12. Procédé selon la revendication 11, prise en combinaison avec la revendication 2, **caractérisé en ce que** le prolongement de l'enveloppe (1) que comporte l'insert est placé dans la position choisie au cours de l'étape c) et **en ce que** l'étape d) comprend en outre les opérations suivantes :
d1) introduire un rivet (R) dans le tube externe, en ladite position choisie, jusque dans le prolongement de l'insert, et d2) riveter l'insert au tube.

13. Procédé selon la revendication 12, **caractérisé en ce que** le rivet (R) comporte une bague fendue à pans inclinés (R2) et une pointe (R1) propre à être introduite en force dans la bague.

14. Procédé selon l'une des revendications 1 et 2, **caractérisé en ce que** l'insert est fixé par sertissage au tube externe, au cours de l'étape d).

15. Procédé selon la revendication 14, prise en combinaison avec la revendication 2, **caractérisé en ce que** l'enveloppe externe (1) de chaque insert comporte au moins une paire d'encoches (6a,6b) rabattues vers l'intérieur de l'enveloppe (1), tandis que le tube externe comprend, en ladite position choisie, une paire de languettes (7a,7b) sensiblement homologues, propres à venir s'appuyer contre les encoches (6a,6b) pour réaliser la fixation de l'étape d).

16. Procédé selon l'une des revendications 1 et 2, **caractérisé en ce que** le diamètre du tube externe (T1) est réduit par magnéto-formage au cours de l'étape d) pour fixer chaque insert.

17. Procédé selon l'une des revendications précédentes, **caractérisé en ce que**, à l'étape c), on prévoit au moins deux points de fixation de chaque insert (G1) au tube externe (T1), diamétralement opposés.

## Patentansprüche

1. Verfahren zur Befestigung mindestens eines Führungseinsatzteils (G1, G2) zwischen zwei koaxialen Rohren (T1, T2), insbesondere einer Vorrichtung für Kraftfahrzeuge gegen Wankbewegungen, von der Art, welche die folgenden Schritte umfasst:
a) zunächst Befestigen jedes Einsatzteils um ein Innenrohr, und
b) Einführen eines Teils des Innenrohrs, welches das Einsatzteil trägt, in ein zugängliches Ende eines Außenrohrs, bis es eine ausgewählte Position in diesem Rohr erreicht,
wobei das Verfahren einen vorläufigen Schritt umfasst, der darin besteht:
a1) Anpassen jedes Einsatzteils (G1), damit es einen Außendurchmesser aufweist, der etwas kleiner ist als der Innendurchmesser des Außenrohrs (T1), im Hinblick darauf, eine Verschiebung mit Spielraum in diesem Rohr von seinem Ende bis zumindest zur ausgewählten Position (P1) zuzulassen,
und wobei das Verfahren mit den folgenden Schritten fortfährt:
c) auf diese Weise jedes Einsatzteil im Außenrohr bis zu seiner ausgewählten Position gleiten zu lassen,
d) eine "Nacheinstellung" vorzunehmen, die darin besteht, an der ausgewählten Position den Durchmesser des Außenrohrs (T1) lokal zu reduzieren, und
e) jedes Einsatzteil an dieser Position im Außenrohr zu befestigen.

2. Verfahren nach Anspruch 1, **dadurch gekennzeichnet, dass** sich die äußere Hülle jedes Einsatzteils axial über ein aktives Teil (2) hinaus verlängert, welches das Einsatzteil umfasst, und dass die Verlängerung der Hülle im Verlauf von Schritt c) an der ausgewählten Position angeordnet wird.

3. Verfahren nach einem der Ansprüche 1 oder 2, **dadurch gekennzeichnet, dass** das Einsatzteil im Verlauf von Schritt d) an das Außenrohr (T1) geschweißt wird.

4. Verfahren nach Anspruch 3, **dadurch gekennzeichnet, dass** Schritt d) die folgenden Arbeitsabläufe umfasst:
d1) Vorsehen mindestens einer Öffnung (5a) im Außenrohr (T1) an der ausgewählten Position,
d2) Einführen eines Schweißstücks (P) in die Öffnung in Kontakt mit der Außenfläche (1) der Hülle eines Einsatzteils, und
d3) Anheben der Temperatur des Schweißstücks, um dieses Einsatzteil am Rohr anzuschweißen.

5. Verfahren nach Anspruch 4, **dadurch gekennzeichnet, dass** während des Arbeitsablaufs d2) das Stück (P) so positioniert wird, dass es die Wände der Öffnung nicht berührt.

6. Verfahren nach Anspruch 5, **dadurch gekennzeichnet, dass** das Stück (P) anfänglich von im Wesentlichen konischer Form ist, die sich zum Äußeren des Außenrohrs (T1) hin erweitert.

7. Verfahren nach Anspruch 3, **dadurch gekennzeichnet, dass** das Einsatzteil durch Laserschweißen am Außenrohr befestigt wird.

8. Verfahren nach Anspruch 7, **dadurch gekennzeichnet, dass** das Einsatzteil an einer Vielzahl von Punkten (S) angeschweißt wird.

9. Verfahren nach Anspruch 7, **dadurch gekennzeichnet, dass** das Einsatzteil entlang einer durchgehenden Umfangslinie angeschweißt wird.

10. Verfahren nach einem der Ansprüche 3 bis 9 in Kombination mit Anspruch 2, **dadurch gekennzeichnet, dass** das Einsatzteil mit der Verlängerung seiner Außenhülle (1) am Außenrohr (T1) angeschweißt wird, um den aktiven Teil vor Wärme zu schützen.

11. Verfahren nach einem der Ansprüche 1 oder 2, **dadurch gekennzeichnet, dass** das Einsatzteil im Verlauf von Schritt d) durch Vernieten am Außenrohr befestigt wird.

12. Verfahren nach Anspruch 11 in Kombination mit Anspruch 2, **dadurch gekennzeichnet, dass** die Verlängerung der Hülle (1), die das Einsatzteil umfasst, im Verlauf von Schritt c) in die ausgewählte Position gebracht wird, und dass der Schritt d) darüber hinaus die folgenden Arbeitsvorgänge umfasst:
d1) Einführen eines Niets (R) in das Außenrohr in der ausgewählten Position bis in die Verlängerung des Einsatzteils, und
d2) Vernieten des Einsatzteils mit dem Rohr.

13. Verfahren nach Anspruch 12, **dadurch gekennzeichnet, dass** der Niet (R) einen Spaltring mit geneigten Seiten (R2) und eine Spitze (R1) umfasst, die sich dazu eignet, zwangsläufig in den Ring eingeführt zu werden.

14. Verfahren nach einem der Ansprüche 1 oder 2, **dadurch gekennzeichnet, dass** das Einsatzteil im Verlauf von Schritt d) durch Versicken am Außenrohr befestigt wird.

15. Verfahren nach Anspruch 14 in Kombination mit Anspruch 2, **dadurch gekennzeichnet, dass** die Außenhülle (1) jedes Einsatzteils mindestens ein Paar von Ausklinkungen (6a, 6b) umfasst, die zum Inneren der Hülle (1) gebogen werden, während das Außenrohr an der ausgewählten Position ein Paar im Wesentlichen homologe Lappen (7a, 7b) umfasst, die sich dazu eignen, an den Ausklinkungen (6a, 6b) in Anlage zu kommen, um die Befestigung beim Schritt d) herzustellen.

16. Verfahren nach einem der Ansprüche 1 oder 2, **dadurch gekennzeichnet, dass** der Durchmesser des Außenrohrs (T1) im Verlauf von Schritt d) durch Magnetumformung reduziert wird, um jedes Einsatzteil zu befestigen.

17. Verfahren nach einem der vorhergehenden Ansprüche, **dadurch gekennzeichnet, dass** beim Schritt c) mindestens zwei diametral entgegengesetzte Befestigungspunkte für jedes Einsatzteil (G1) am Außenrohr (T1) vorgesehen werden.

## Claims

1. Method for fixing at least one guiding insert (G1, G2) between two coaxial tubes (T1, T2), in particular of an anti-roll device for a motor vehicle, of the type comprising the following steps:
a) first fixing each insert around an inner tube, and
b) introducing a portion of the inner tube which carries the insert into an accessible end of an outer tube until it reaches a selected position in this tube,
the method comprising a prior step which consists in:
al) shaping each insert (G1) so that it has an outer diameter which is slightly smaller than the inner diameter of the outer tube (T1) in order to allow the translation of the insert with play in this tube, from the end thereof at least as far as the selected position (P1),
and the method being continued with the following steps:
c) causing each insert to slide in this manner in the outer tube as far as the selected position thereof,
d) carrying out a "play adjusting operation" which consists in locally reducing the diameter of the outer tube (T1) in the selected position, and
e) fixing each insert in that position in the outer tube.

2. Method according to claim 1, **characterised in that** the outer covering of each insert extends axially beyond an active portion (2) which the insert comprises, and **in that** this extension of the covering is arranged at the selected position during step c).

3. Method according to either claim 1 or claim 2, **characterised in that** the insert is welded to the outer tube (T1) during step d).

4. Method according to claim 3, **characterised in that** step d) comprises the following operations:
d1) providing, at the selected position, at least one opening (5a) in the outer tube (T1),
d2) introducing a welding pin (P) into the opening and into contact with the outer surface (1) of the casing of an insert, and
d3) increasing the temperature of the pin in order to weld this insert to the tube.

5. Method according to claim 4, **characterised in that**, during the operation d2), the pin (P) is positioned without touching the walls of the opening.

6. Method according to claim 5, **characterised in that** the pin (P) initially has a substantially conical form which widens towards the outer side of the outer tube (T1).

7. Method according to claim 3, **characterised in that** the insert is fixed to the outer tube by means of laser welding.

8. Method according to claim 7, **characterised in that** the insert is welded at a plurality of points (S).

9. Method according to claim 7, **characterised in that** the insert is welded along a continuous circumferential line.

10. Method according to any one of claims 3 to 9, taken in combination with claim 2, **characterised in that** the insert is welded to the outer tube (T1) by means of the extension of the outer casing (1) thereof, in such a manner as to thermally protect the active portion.

11. Method according to either claim 1 or claim 2, **characterised in that** the insert is fixed to the outer tube during step d) by means of riveting.

12. Method according to claim 11, taken in combination with claim 2, **characterised in that** the extension of the casing (1) which the insert comprises is placed at the selected position during step c), and **in that** step d) further comprises the following operations:
d1) introducing a rivet (R) into the outer tube, at the selected position, as far as the extension of the insert, and
d2) riveting the insert to the tube.

13. Method according to claim 12, **characterised in that** the rivet (R) comprises a split ring having inclined portions (R2) and a pointed portion (R1) which can be introduced into the ring with force.

14. Method according to either claim 1 or claim 2, **characterised in that** the insert is fixed to the outer tube during step d) by means of crimping.

15. Method according to claim 14, taken in combination with claim 2, **characterised in that** the outer casing (1) of each insert comprises at least one pair of cut portions (6a, 6b) which are bent down towards the inner side of the casing (1), and the outer tube comprises, at the selected position, a pair of substantially homologous tongues (7a, 7b) which can be pressed against the cut portions (6a, 6b) in order to bring about the fixing of step d).

16. Method according to either claim 1 or claim 2, **characterised in that** the diameter of the outer tube (T1) is reduced by means of magneto-forming during step d) in order to fix each insert.

17. Method according to any one of the preceding claims, **characterised in that**, during step c), there are provided at least two diametrically opposed points for fixing each insert (G1) to the outer tube (T1).
